(19) Europäisches Patentamt
European Patent Office
Office européen des brevets

(11)  **EP 3 389 303 B1**

(12)  **EUROPEAN PATENT SPECIFICATION**

(45) Date of publication and mention
of the grant of the patent:
**02.09.2020  Bulletin 2020/36**

(51) Int Cl.:
*H04W 24/08* *(2009.01)*          *H04L 12/24* *(2006.01)*
*H04L 12/26* *(2006.01)*          *H04W 84/12* *(2009.01)*

(21) Application number: **17166699.3**

(22) Date of filing: **14.04.2017**

(54) **TRIGGERING RECOMMENDED SETTINGS IN A COMMUNICATION NETWORK**

AUSLÖSUNG EMPFOHLENER EINSTELLUNGEN IN EINEM KOMMUNIKATIONSNETZ

DÉCLENCHEMENT DE RÉGLAGES RECOMMANDÉS DANS UN RÉSEAU DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.10.2018  Bulletin 2018/42**

(73) Proprietor: **Nokia Solutions and Networks Oy
02610 Espoo (FI)**

(72) Inventor: **Ligata, Amir
2018 Antwerpen (BE)**

(74) Representative: **IP HILLS NV
Hubert Frère-Orbanlaan 329
9000 Gent (BE)**

(56) References cited:
**WO-A1-2016/169616     WO-A1-2016/184520**

## Description

## Technical Field

The present invention generally relates, among others, to a network management center for analysing a wireless communication network, for example a Wi-Fi network.

## Background

Wi-Fi networks are deployed in a massive manner in both indoor and outdoor environments to enable ubiquitous connectivity to end users. Since the positioning of Wi-Fi access points of the networks is characterized by a lack of coordination and planning, particularly in a multi-operator environment, different problems can occur such as contention and interference problems. In order to remediate these problems, operators trigger troubleshooting algorithms.

The troubleshooting algorithms comprises recommended settings related to an identified problem. Once a problem is detected the related recommended setting is applied in order to guarantee an efficient users' experience. Due to user's mobility and ever increasing throughput demand the triggering of the recommended settings is continuously repeated.

In WO2019/184520A1 a method is disclosed performed by a first network node for determining whether a performance of a cell associated with a second network node is degraded or not. The first network node and the second network node operate in a wireless communications network. The first network node obtains a first set of values making up a pattern comprising a set of values indicative of a performance of the cell. The first network node then determines a first correlation between the obtained first set of values and a generated set of values. The generated set of values is indicative of a degraded performance of the cell. The first network node then determines whether the performance of the cell is degraded or not based on the determined first correlation, with respect to a first threshold.

In WO2016/169616A1 an apparatus and corresponding method is disclosed for determining a cause of a fault in a network. The apparatus comprises means for receiving a plurality of time separated samples of a primary network metric that are indicative of a fault in the network, and a plurality of time separated samples of one or more indicator network metrics. The apparatus further comprises means for correlating one or more metric correlation values relating to dependences between the samples of the primary network metric and samples of each of the one or more indicator network metrics. The correlator is further configured to determine one or more fault correlation values relating to dependences between the one or more metric correlation values and a plurality of stored metric correlation values associated with a fault cause. The apparatus further comprises means for determining a cause of the fault based on the one or more fault correlation values.

## Summary

The above solution has different drawbacks and shortcomings. First, the continuously triggering of a recommended setting means that a user is continuously affected. This may lead to a poor customer experience. Second, a same problem may have multiple recommendations with no clear preference on which one is the most effective for a given event. Third, there is uncertainty on how a network reacts on a triggered recommended setting and whether the problem will be remediated. This may lead to an operation in an open loop. Fourth, a problem resolved in one network doesn't imply that the similar problem is resolved in networks other than the target network. This may lead to conflicting networks.

It is an object of the present disclosure to overcome the above shortcomings and to provide a solution that triggers recommended settings while keeping track of the users' experience and the impact on other networks.

This object is achieved, according to a first aspect, by a network management center for predicting behavioural patterns in a wireless communication network comprising:

- a monitoring module arranged for obtaining a first set of metric data vectors for different first time periods; and wherein a metric data vector comprises a second set of wireless device metrics; and wherein each wireless device metric is indicative for a performance of the wireless communication network in relation with the respective first time period; and
- a predicting module arranged for predicting a third set of future metric data vectors from the first set of metric data vectors; and
- a pattern analysing module arranged to compare the third set of future metric data vectors with a library of different behavioural patterns in the communication network wherein a behavioural pattern comprises a fourth set of metric data vectors thereby defining the behavioural pattern; and to relate the third set of future data vectors to a respective behavioural pattern in the library when the future data vectors are similar to the metric data vectors of the respective behavioural pattern

CHARACTERIZED IN THAT
the library further comprises a recommended setting for each behavioural pattern; and the network management center further comprises a triggering module arranged to apply the recommended setting of the respective behavioural pattern to the wireless communication network.

In other words, prior to triggering a recommended setting in the network, the way the network currently behaves and will behave in the future is identified, i.e. by the prediction of behavioural patterns. In order to derive the future behaviour based on the current one, the network management center takes different metric data vectors that are related to a short time period, the first time period, for example one hour or somewhere in the range of 10 to 120 minutes. Each metric data vector comprises wireless device metrics which represent the performance of the wireless communication network, for example a Wi-Fi network, for each time period. These vectors are collected in a set, the first set, and could for example be represented as a two dimensional matrix where the columns represent the different metric vectors for each time period. The time window of all the time periods is for example one day. Next, based on this set of vectors, the predicting module predicts future metric data vectors which are collected in a third set. A prediction is, for example, made for a time window of half a day for a consecutive time period, wherein the time periods are the same as the first time period. This means that the number of columns in the third set is half the number of the first set. Next, the network management center consults a library containing different behavioural patterns in the communication network. Such a behavioural pattern comprises on its behalf also a set of metric data vectors, the fourth set, which can be compared with the data vectors in the third set. By comparing the metric data vectors in the third and fourth set, the former may be related to a respective behavioural pattern in the library when the data vectors in the third set are similar to data vectors in the fourth set.

Examples of wireless device metrics are the downstream throughput, the upstream throughput, the number of connected devices, an interference measure, a contention measure, a coverage measure or an overload measure.

An advantage of predicting future data vectors combined with comparing them with data vectors of behavioural patterns, is that a more accurate forecast is made on how the communication network will evolve in time. In this way, the network management center may better anticipate to possible outcomes when applying a recommended setting. Instead of immediately reacting to a problem that occurs in the communication network, the future behaviour of the network is considered as a whole.

Thus, the library comprises different recommended settings, each linked to a behavioural pattern. Such a recommended setting is an applied solution for a problem in a behavioural pattern such as, for example, the switching of a channel when contention is detected. When a behavioural pattern is identified by the network management center through the comparison of metric data vectors, the linked recommended setting may subsequently identified as well. The network management center then applies this recommended setting by triggering the triggering module. The network management center thus anticipates to a future behaviour of the network by applying settings related to a pattern.

In this way, a recommended setting will not be applied immediately when a problem is detected, but after a behavioural pattern is identified. By linking a problem to a behavioural pattern and subsequently to a recommended setting, the recommended setting will be more effective to solve the problem for a given event, since also the reaction of the communication is taken into account.

According to an embodiment, two metric data vectors are identified as similar when the difference between the two metric data vectors is smaller than a predetermined similarity vector.

In other words, the similarity vector thus defines a distance between two metric data vectors and, thus, by comparing metric data vectors in the third and fourth data set, a distance or similarity between different data vectors is obtained when the difference is smaller than a predetermined similarity vector. This allows to identify data vectors in the third set that probably belong to a behavioural pattern.

Advantageously, the library further comprises one or more sets of different behavioural patterns of one or more other wireless communication networks. Thus by combining behavioural patterns of more networks, identifying similar data vectors and next applying related recommended settings, the network management center operates in a more accurate way.

The library further comprises, according to an embodiment, a network response for a respective behavioural pattern. The pattern analysing module is then further arranged to identify the recommended setting with the most efficient network response and the triggering module applies this recommended setting.

In other words, different recommended settings may be linked to a behavioural pattern. In order to decide which of these settings is the most appropriate to be applied, the library comprises network responses on their behalf linked to a setting. A network response captures how effectively a problem was remediated with the applied recommended setting. The network management center identifies the recommended setting with the most efficient network response and in this way the most efficient recommended setting is applied.

Besides the network responses, the library may further comprise a list of problems each related to a respective behavioural pattern. The pattern analysing module is then further arranged to identify the most occurring problem and related recommended setting and the triggering module only applies the recommended setting related to the most occurring problem. In this way, the network management center ensures that the most occurring problem is tackled.

According to an embodiment, the monitoring module is further arranged to acquire device parameters from one or more wireless devices in the wireless communication network within at least every first time period and to determine from the parameters the respective wireless device metrics.

Ways for obtaining such parameters and, thus, for obtaining the metrics are readily available, for example by use of the TR-181 standard for remote management of network devices. This allows obtaining a whole range of useful device parameters among which for example: the total number of bytes sent, the total number of bytes received, the total number of erroneous bytes sent, the total number of erroneous bytes received, the total number of packets sent, the total number of packets received, the total number of sent packets that were discarded, the total number of received packets that were discarded, the total number of retransmitted packets, the total number of failed retransmissions, the total number of associated devices, the total number of clear channel assessment requests and the total number of clear channel assessment reports.

According to a second aspect, the disclosure relates to a computer-implemented method for triggering recommendations in a wireless communication network comprising:

- obtaining a first set of metric data vectors for different first time periods; and wherein a metric data vector comprises a second set of wireless device metrics; and wherein each wireless device metric is indicative for a performance of the wireless communication network in relation with the respective first time period; and
- predicting a third set of future metric data vectors from the first set of metric data vectors; and
- comparing the third set of future metric data vectors with a library of different behavioural patterns in the communication network wherein a behavioural pattern comprises a fourth set of metric data vectors thereby defining the behavioural pattern; and relating the third set of future data vectors to a respective behavioural pattern in the library when the future data vectors are similar to the metric data vectors of the respective behavioural pattern

CHARACTERIZED IN THAT the method further comprises the step of:
applying a recommended setting from the library related to the respective behavioural pattern to the wireless communication network.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

## Brief Description of the Drawings

Fig. 1 illustrates a plurality of measured and predicted metric data vectors according to an embodiment of the invention; and

Fig. 2 illustrates steps performed by a network management center for predicting behavioural patterns and triggering recommended settings in a communication network according to an embodiment of the invention; and

Fig. 3 illustrates a identify recommended settings based on a network response or a most occurring problem according to an embodiment of the invention; and

Fig. 4 illustrates a network management center according to an embodiment of the invention that predicts behavioural patterns and triggers recommended settings in a wireless communication network; and

Fig. 5 illustrates a suitable computing system for performing steps according to various embodiments of the invention.

## Detailed Description of Embodiment(s)

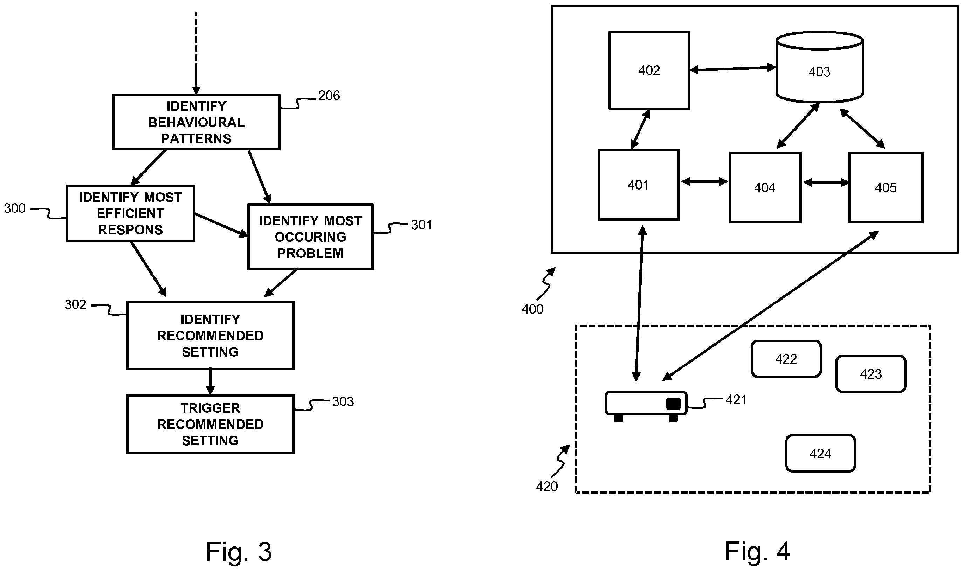

Fig. 4 illustrates a network management center according to an embodiment of the invention. Network management center 400 may be used for predicting behavioural patterns in a wireless network 420, e.g. a Wi-Fi network comprising one or more access points 421 and wireless communication devices 422, 423, 424. Network management center 400 comprises a monitoring module 401, a predicting module 402, a data store or library 403, a pattern analysing module 404 and a triggering module 405. Modules 401-405 are configured to perform various steps according to different embodiments as will be described below.

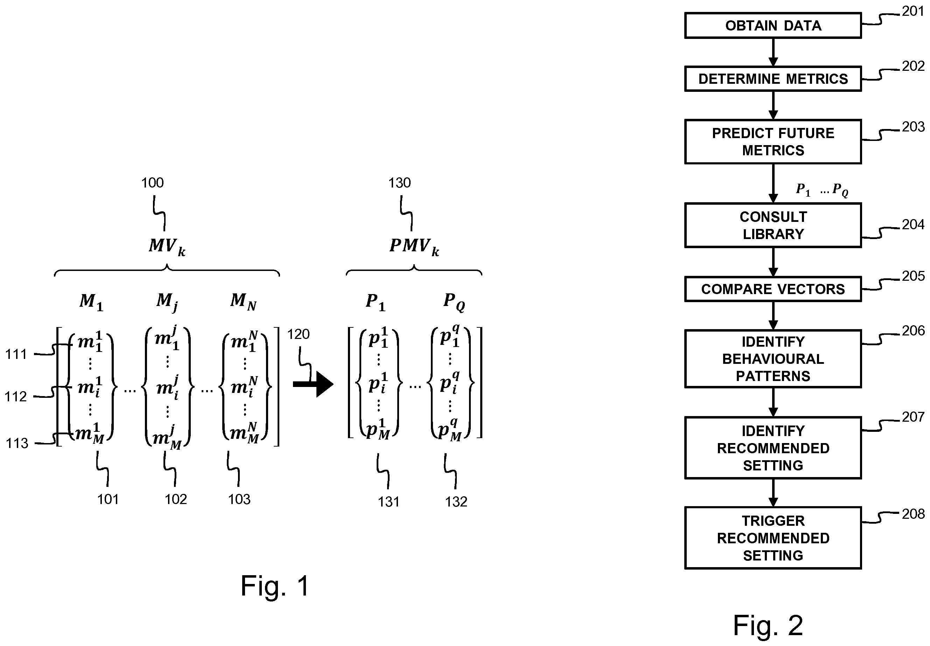

Fig. 2 illustrates steps performed by network management center 400 according to an embodiment of the invention. In step 201 monitoring module 401 obtains performance data from a wireless communication network 420. The data is collected at a certain collection frequency, e.g. every 10 to 120 minutes. Such data may for example be collected according to the TR-181 Device Data Model for remote management according to TR-069 as published by the broadband forum. The data may then comprise one or more of the following parameters:

- Device.WiFi.Radio.{i}.Stats. BytesSent
- Device.WiFi.Radio.{i}.Stats. BytesReceived
- Device.WiFi.Radio.{i}.Stats. ErrorsSent
- Device.WiFi.Radio.{i}.Stats. ErrorsReceived

- Device.WiFi.Radio.{i}.Stats. PacketsSent
- Device.WiFi.Radio.{i}.Stats. PacketsReceived
- Device.WiFi. Radio.{i}.Stats. DiscardPacketsSent
- Device.WiFi.Radio.{i}.Stats. DiscardPacketsReceived
- Device.WiFi.SSID.{i}.Stats.RetransCount
- Device.WiFi.SSID.{i}.Stats.FailedRetransCount
- Device.WiFi.NeighboringWiFiDiagnostic.Result.{i}.
- Device.WiFi.AccessPoint.{i}.AssociatedDeviceNumberOfEntries
- Device.WiFi.Radio.{i}.CCARequest
- Device.WiFi.Radio.{i}.CCAReport

This way, monitoring module 401 obtains various performance parameters from access point 421 and wireless communication devices 422, 423, 424 which relates to the performance of the wireless communication network 420 during the past time period, i.e. over the last 10 to 120 minutes. The complete data collection process is performed over a second and longer period of time, preferably at least around 12 hours, more preferably around 1 day.

When all data is collected, the method proceeds to step 202 wherein the obtained parameters are transformed into a set of metrics which represent for each first time period the performance of the communication network 420. Examples of the derived metrics are:

- a downstream throughput; and
- an upstream throughput; and
- a number of connected devices; and
- an interference measure; and
- a contention measure; and
- a coverage measure; and
- an overload measure.

After determining the metrics, a series of metric data vectors is obtained, i.e. a data vector for each smaller period wherein each vector comprises values for each for the derived metrics. This group of data vectors is illustrated in Fig. 4, wherein the vectors are joint in a matrix. Matrix $MV_k$ 100 comprises, for example $N$ data vectors, such as data vectors $M_1$ 101, $M_j$ 102 and $M_N$ 103. Each data vectors may then comprise $M$ metrics, such as $m_1^1$ 111, $m_i^1$ 112, and $m_M^1$ 113 for data vector $M_1$ 101.

In the next step 203, the data vectors in matrix 100 are used to predict future data vectors. The matrix $MV_k$ 100 is thus transformed 120 into a second matrix $PMV_k$ 130 which comprises on its behalf a number of data vectors, such as $P_1$ 131 and $P_Q$ 132. The number of predicted is represented as $Q$, and preferably the ratio of measured vectors $N$ over the predicted one $Q$ is in the range of 1,33 to 4, and more preferably equal to 2. The number of data metrics for a predicted data vector is the same as that of the measured ones, thus in the example of Fig. 1 equal to $M$.

In the next step 204, network management center 400 consults library 403. Library 403 comprises different behavioural patterns of communication network 400. These behavioural patterns comprises another set of data vectors which are compared 205 with the predicted vectors $P_1$ 131 to $P_Q$ 132. The comparison is performed by the pattern analysing module 404. This means that similar data vectors are identified between those of the library 403 and the predicted ones in matrix $PMV_k$ 130. This is done by calculating a difference between two vectors, which has to be smaller than a predetermined similarity vector. When two vectors of each set are identified as similar, a behavioural pattern may be identified 206 as well through the link in the library 403.

The method then proceeds to step 207 wherein recommended settings are identified 207 which are linked to the identified 206 behavioural pattern. A recommended setting may, for example, be the switching of a channel of access point 421. Next, in step 208 triggering module 404 triggers 208 the recommended setting such that the network settings are adapted.

According to an embodiment of the invention, several recommended settings in the library 403 may be linked to an identified behavioural pattern. In order to select one of the recommended settings, the pattern analysing module 404 is further arranged to select one out of the recommended settings. The steps to perform this selection are illustrated in Fig. 3. In the library 403 further comprises network responses which may be related to a behavioural pattern. Such a network response is, for example, how efficient a network responded on a recommended setting. After step 206 wherein behavioural patterns are identified, the pattern analysing module is then further arranged to identify the recommended setting with the most efficient network response and the related recommended setting is identified 302. Next, the triggering module 404 triggers 303 this recommended setting.

According to another embodiment of the invention, the library 403 may further comprise a list of problems related to behavioural pattern. Such a problem may, for example, be a decrease in throughput to devices 422, 423, 424 connected to access point 421. The pattern analysing module 404 identifies 301 the most occurring problem and the related recommended setting 302 is then triggered 303 by the triggering module 404.

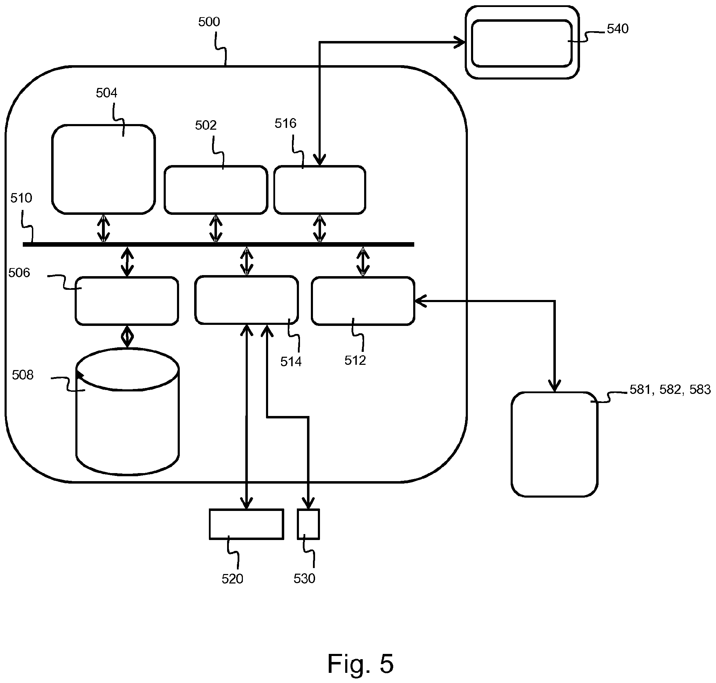

Figure 5 shows a suitable computing system 500 for performing the steps according to the above embodiments. Computing system 500 may be used as the network management center 400 for triggering recommended setting for communication network 420. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems such as for example with wireless access point 421 to acquire the parameters at regular intervals or with graphical system 406 for displaying the generated visual representations of the identified behavioural patterns. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A network management center for predicting behavioural patterns in a wireless communication network comprising:

   - a monitoring module arranged for obtaining a first set of metric data vectors for different first time periods; and wherein a metric data vector comprises a second set of wireless device metrics; and wherein each wireless device metric is indicative for a performance of the wireless communication network in relation with the respective first time period; and
   - a predicting module arranged for predicting a third set of future metric data vectors from the first set of metric data vectors; and
   - a pattern analysing module arranged to compare the third set of future metric data vectors with a library of different behavioural patterns in the communication network wherein a behavioural pattern comprises a fourth set of metric data vectors thereby defining the behavioural pattern; and to relate the third set of future data vectors to a respective behavioural pattern in the library when the future data vectors are similar to the metric data vectors of the respective behavioural pattern

   **CHARACTERIZED IN THAT**
   the library further comprises a recommended setting for each behavioural pattern; and wherein the network management center further comprises a triggering module arranged to apply the recommended setting of the respective behavioural pattern to the wireless communication network.

2. Network management center according to claim 1, wherein two metric data vectors are identified as similar when the difference between the two metric data vectors is smaller than a predetermined similarity vector.

3. Network management center according to claim 1, wherein the library further comprises one or more sets of different behavioural patterns of one or more other wireless communication networks.

4. Network management center according to claim 3, wherein the library further comprises a network response for a respective behavioural pattern; and wherein the pattern analysing module is further arranged to identify the recommended setting with the most efficient network response; and wherein the triggering module is further arranged to apply the recommended setting.

5. Network management center according to claim 4, wherein the library further comprises a problem for a respective behavioural pattern; and wherein the pattern analysing module is further arranged to identify the most occurring problem and related recommended setting; and wherein the triggering module is further arranges to only apply the recommended setting related to the most occurring problem.

6. Network management center according to claim 1 wherein the wireless device metrics comprise at least one of the group of:

    - a downstream throughput; and
    - an upstream throughput; and
    - a number of connected devices; and
    - an interference measure; and
    - a contention measure; and
    - a coverage measure; and
    - an overload measure.

7. Network management center according to claim 1 wherein the monitoring module is further arranged to acquire device parameters from one or more wireless devices in the wireless communication network within at least every first time period and to determine from the parameters the respective wireless device metrics.

8. Network management center according to claim 7 wherein the device parameters comprise at least one of the group of:

    - a total number of bytes sent; and
    - a total number of bytes received; and
    - a total number of erroneous bytes sent; and
    - a total number of erroneous bytes received; and
    - a total number of packets sent; and

    - a total number of packets received; and
    - a total number of sent packets that were discarded; and
    - a total number of received packets that were discarded; and
    - a total number of retransmitted packets; and
    - a total number of failed retransmissions; and
    - a total number of associated devices; and
    - a total number of CCA requests; and
    - a total number of CCA reports.

9. Network management center according to claim 1 wherein the wireless communication network is a Wi-Fi network.

10. Computer-implemented method for triggering recommendations in a wireless communication network comprising:

    - obtaining a first set of metric data vectors for different first time periods; and wherein a metric data vector comprises a second set of wireless device metrics; and wherein each wireless device metric is indicative for a performance of the wireless communication network in relation with the respective first time period; and
    - predicting a third set of future metric data vectors from the first set of metric data vectors; and
    - comparing the third set of future metric data vectors with a library of different behavioural patterns in the communication network wherein a behavioural pattern comprises a fourth set of metric data vectors thereby defining the behavioural pattern; and relating the third set of future data vectors to a respective behavioural pattern in the library when the future data vectors are similar to the metric data vectors of the respective behavioural pattern

    **CHARACTERIZED IN THAT** the method further comprises the step of:

    - applying a recommended setting from the library related to the respective behavioural pattern to the wireless communication network.

11. A computer program product comprising a computer-executable instructions for performing the method according to claim 10 when the program is run on a computer.

12. A computer readable storage medium comprising the computer program product according to claim 11.

13. A data processing system programmed for carrying out the method according to claim 10.

## Patentansprüche

1. Netzmanagementzentrum zum Vorhersagen von Verhaltensmustern in einem drahtlosen Kommunikationsnetz, das Folgendes umfasst:

   - ein Überwachungsmodul, das zum Ermitteln eines ersten Satzes von metrischen Datenvektoren für unterschiedliche erste Zeitspannen ausgelegt ist, wobei ein metrischer Datenvektor einen zweiten Satz von Metriken drahtloser Vorrichtungen umfasst, wobei jede Metrik drahtloser Vorrichtungen eine Leistungsfähigkeit des drahtlosen Kommunikationsnetzes in Bezug auf die jeweilige erste Zeitspanne angibt, und
   - ein Vorhersagemodul, das zum Vorhersagen eines dritten Satzes von zukünftigen metrischen Datenvektoren aus dem ersten Satz von metrischen Datenvektoren ausgelegt ist, und
   - ein Musteranalysemodul, das dafür ausgelegt ist, den dritten Satz von zukünftigen metrischen Datenvektoren mit einem Archiv von unterschiedlichen Verhaltensmustern in dem Kommunikationsnetz zu vergleichen, wobei ein Verhaltensmuster einen vierten Satz von metrischen Datenvektoren umfasst, wodurch das Verhaltensmuster definiert wird, und den dritten Satz von zukünftigen Datenvektoren mit einem jeweiligen Verhaltensmuster in dem Archiv in Beziehung zu setzen, wenn die zukünftigen Datenvektoren ähnlich wie die metrischen Datenvektoren des jeweiligen Verhaltensmusters sind,

   **dadurch gekennzeichnet, dass**
   das Archiv eine empfohlene Einstellung für jedes Verhaltensmuster umfasst, wobei das Netzmanagementzentrum ferner ein Auslösemodul umfasst, das dafür ausgelegt ist, die empfohlene Einstellung des jeweiligen Verhaltensmusters auf das drahtlose Kommunikationsnetz anzuwenden.

2. Netzmanagementzentrum nach Anspruch 1, wobei zwei metrische Datenvektoren als ähnlich identifiziert werden, wenn der Unterschied zwischen den beiden metrischen Datenvektoren kleiner als ein vorbestimmter Ähnlichkeitsvektor ist.

3. Netzmanagementzentrum nach Anspruch 1, wobei das Archiv ferner einen oder mehrere Sätze von unterschiedlichen Verhaltensmustern eines oder mehrerer anderer drahtloser Kommunikationsnetze umfasst.

4. Netzmanagementzentrum nach Anspruch 3, wobei das Archiv ferner eine Netzantwort für ein jeweiliges Verhaltensmuster umfasst, wobei das Musteranalysemodul ferner ausgelegt ist, die empfohlene Einstellung mit der effizientesten Netzantwort zu identifizieren, wobei das Auslösemodul ferner ausgelegt ist, die empfohlene Einstellung anzuwenden.

5. Netzmanagementzentrum nach Anspruch 4, wobei das Archiv ferner eine Aufgabenstellung für ein jeweiliges Verhaltensmuster umfasst, wobei das Musteranalysemodul ferner ausgelegt ist, die am häufigsten auftretende Aufgabenstellung und die zugehörige empfohlene Einstellung zu identifizieren, und wobei das Auslösemodul ferner ausgelegt ist, nur die empfohlene Einstellung, die der am häufigsten auftretenden Aufgabenstellung zugehörig ist, anzuwenden.

6. Netzmanagementzentrum nach Anspruch 1, wobei die Metriken drahtloser Vorrichtungen mindestens eine aus der folgenden Gruppe umfassen:

   - einen Downstream-Durchsatz,
   - einen Upstream-Durchsatz,
   - eine Anzahl von verbundenen Vorrichtungen,
   - ein Interferenzmaß,
   - ein Konfliktmaß,
   - ein Abdeckungsmaß und
   - ein Überlastungsmaß.

7. Netzmanagementzentrum nach Anspruch 1, wobei das Überwachungsmodul ferner ausgelegt ist, Vorrichtungsparameter von einer oder mehreren drahtlosen Vorrichtungen in dem drahtlosen Kommunikationsnetz innerhalb von mindestens jeder ersten Zeitspanne zu erfassen und aus den Parametern die jeweiligen Metriken drahtloser Vorrichtungen zu bestimmen.

8. Netzmanagementzentrum nach Anspruch 7, wobei die Vorrichtungsparameter mindestens einen aus der folgenden Gruppe umfassen:

   - eine Gesamtzahl von gesendeten Bytes,
   - eine Gesamtzahl von empfangenen Bytes,
   - eine Gesamtzahl von gesendeten fehlerhaften Bytes,
   - eine Gesamtzahl von empfangenen fehlerhaften Bytes,
   - eine Gesamtzahl von gesendeten Paketen,
   - eine Gesamtzahl von empfangenen Paketen,
   - eine Gesamtzahl von gesendeten Paketen, die verworfen wurden,
   - eine Gesamtzahl von empfangenen Paketen, die verworfen wurden,
   - eine Gesamtzahl von weitergesendeten Paketen,
   - eine Gesamtzahl von fehlgeschlagenen Weitersendungen,
   - eine Gesamtzahl zugeordneter Vorrichtungen,
   - eine Gesamtzahl von CCA-Anforderungen und

- eine Gesamtzahl von CCA-Berichten.

9. Netzmanagementzentrum nach Anspruch 1, wobei das drahtlose Kommunikationsnetz ein Wi-Fi-Netz ist.

10. Computerimplementiertes Verfahren zum Auslösen von Empfehlungen in einem drahtlosen Kommunikationsnetz, das Folgendes umfasst:

- Ermitteln eines ersten Satzes von metrischen Datenvektoren für unterschiedliche erste Zeitspannen, wobei ein metrischer Datenvektor einen zweiten Satz von Metriken drahtloser Vorrichtungen umfasst, wobei jede Metrik drahtloser Vorrichtungen eine Leistungsfähigkeit des drahtlosen Kommunikationsnetzes in Bezug auf die jeweilige erste Zeitspanne angibt, und
- Vorhersagen eines dritten Satzes von zukünftigen metrischen Datenvektoren aus dem ersten Satz von metrischen Datenvektoren und
- Vergleichen des dritten Satzes von zukünftigen metrischen Datenvektoren mit einem Archiv von unterschiedlichen Verhaltensmustern in dem Kommunikationsnetz, wobei ein Verhaltensmuster einen vierten Satz von metrischen Datenvektoren umfasst, wodurch das Verhaltensmuster definiert wird, und in Beziehung Setzen des dritten Satzes von zukünftigen Datenvektoren mit einem jeweiligen Verhaltensmuster in dem Archiv, wenn die zukünftigen Datenvektoren ähnlich wie die metrischen Datenvektoren des jeweiligen Verhaltensmusters sind,

**dadurch gekennzeichnet, dass** das Verfahren ferner den folgenden Schritt umfasst:

- Anwenden einer empfohlenen Einstellung aus dem Archiv, die dem jeweiligen Verhaltensmuster zugehörig ist, auf das drahtlose Kommunikationsnetz.

11. Computerprogrammprodukt, das computerausführbare Anweisungen zum Durchführen des Verfahrens nach Anspruch 10, wenn das Programm auf einem Computer läuft, umfasst.

12. Computerlesbares Speichermedium, das das Computerprogrammprodukt nach Anspruch 11 umfasst.

13. Datenverarbeitungssystem, das zum Ausführen des Verfahrens nach Anspruch 10 programmiert ist.

**Revendications**

1. Centre de gestion de réseau pour la prédiction de modèles de comportement dans un réseau de communication sans fil comprenant :

- un module de surveillance agencé pour obtenir un premier ensemble de vecteurs de données de mesure pour différentes premières périodes de temps ; et où un vecteur de données de mesure comprend un second ensemble de mesures de dispositif sans fil ; et où chaque mesure de dispositif sans fil est indicative d'une performance du réseau de communication sans fil en relation avec la première période de temps respective ; et
- un module de prédiction agencé pour prévoir un troisième ensemble de futurs vecteurs de données de mesure à partir du premier ensemble de vecteurs de données de mesure ; et
- un module d'analyse de modèle agencé pour comparer le troisième ensemble de futurs vecteurs de données de mesure avec une bibliothèque de différents modèles de comportement dans le réseau de communication, où un modèle de comportement comprend un quatrième ensemble de vecteurs de données de mesure définissant ainsi le modèle de comportement ; et pour relier le troisième ensemble de futurs vecteurs de données à un modèle de comportement respectif dans la bibliothèque lorsque les futurs vecteurs de données sont similaires aux vecteurs de données de mesure du modèle de comportement respectif **caractérisé en ce que** : la bibliothèque comprend en outre un paramétrage recommandé pour chaque modèle de comportement ; et où le centre de gestion du réseau comprend en outre un module de déclenchement agencé pour appliquer le paramétrage recommandé du modèle de comportement respectif au réseau de communication sans fil.

2. Centre de gestion de réseau selon la revendication 1, dans lequel deux vecteurs de données de mesure sont identifiés comme similaires lorsque la différence entre les deux vecteurs de données de mesure est inférieure à un vecteur de similarité prédéterminé.

3. Centre de gestion de réseau selon la revendication 1, dans lequel la bibliothèque comprend en outre un ou plusieurs ensembles de différents modèles de comportement d'un ou plusieurs autres réseaux de communication sans fil.

4. Centre de gestion de réseau selon la revendication 3, dans lequel la bibliothèque comprend en outre une réponse de réseau pour un modèle de comportement respectif ; et où le module d'analyse de modèle est en outre agencé pour identifier le paramétrage recommandé avec la réponse de réseau la plus efficace ; et où le module de déclenchement est en outre agencé pour appliquer le paramétrage recommandé.

5. Centre de gestion de réseau selon la revendication 4, dans lequel la bibliothèque comprend en outre un problème pour un modèle de comportement respectif ; et où le module d'analyse de modèle est en outre agencé pour identifier le problème le plus fréquent et le paramétrage recommandé associé ; et où le module de déclenchement est en outre agencé pour appliquer uniquement le paramétrage recommandé associé au problème le plus fréquent.

6. Centre de gestion de réseau selon la revendication 1, dans lequel les mesures du dispositif sans fil comprennent au moins un élément du groupe suivant :

   - un débit aval ; et
   - un débit amont ; et
   - un certain nombre de dispositifs connectés ; et
   - une mesure d'interférence ; et
   - une mesure de contention ; et
   - une mesure de couverture ; et
   - une mesure de surcharge.

7. Centre de gestion de réseau selon la revendication 1, dans lequel le module de surveillance est en outre agencé pour acquérir des paramètres de dispositif d'un ou de plusieurs dispositifs sans fil dans le réseau de communication sans fil au cours d'au moins chaque première période de temps et pour déterminer, à partir des paramètres, les mesures respectives des dispositifs sans fil.

8. Centre de gestion de réseau selon la revendication 7, dans lequel les paramètres de dispositif comprennent au moins un élément du groupe suivant :

   - un nombre total d'octets envoyés ; et
   - un nombre total d'octets reçus ; et
   - un nombre total d'octets erronés envoyés ; et
   - un nombre total d'octets erronés reçus ; et
   - un nombre total de paquets envoyés ; et
   - un nombre total de paquets reçus ; et
   - un nombre total de paquets envoyés qui ont été rejetés ; et
   - un nombre total de paquets reçus qui ont été rejetés ; et
   - un nombre total de paquets retransmis ; et
   - un nombre total de retransmissions qui ont échoué ; et
   - un nombre total de dispositifs associés ; et
   - un nombre total de demandes CCA ; et
   - un nombre total de rapports CCA.

9. Centre de gestion de réseau selon la revendication 1, dans lequel le réseau de communication sans fil est un réseau Wi-Fi.

10. Procédé mise en œuvre par ordinateur pour déclencher des recommandations dans un réseau de communication sans fil, le procédé comprenant les étapes suivantes :

    - obtenir un premier ensemble de vecteurs de données de mesure pour différentes premières périodes de temps ; et où un vecteur de données de mesure comprend un second ensemble de mesures de dispositifs sans fil ; et où chaque mesure de dispositif sans fil est indicative d'une performance du réseau de communication sans fil en relation avec la première période de temps respective ; et
    - prévoir un troisième ensemble de futurs vecteurs de données de mesure à partir du premier ensemble de vecteurs de données de mesure ; et
    - comparer le troisième ensemble de futurs vecteurs de données de mesure avec une bibliothèque de différents modèles de comportement dans le réseau de communication, où un modèle de comportement comprend un quatrième ensemble de vecteurs de données de mesure définissant ainsi le modèle de comportement ; et relier le troisième ensemble de futurs vecteurs de données à un modèle de comportement respectif dans la bibliothèque lorsque les futurs vecteurs de données sont similaires aux vecteurs de données de mesure du modèle de comportement respectif **caractérisé en ce que** le procédé comprend en outre l'étape suivante :
    - appliquer, au réseau de communication sans fil, un paramétrage recommandé de la bibliothèque lié au modèle de comportement respectif.

11. Produit programme informatique comprenant des instructions exécutables par ordinateur pour exécuter le procédé selon la revendication 10 lorsque le programme est exécuté sur un ordinateur.

12. Support de stockage lisible par ordinateur comprenant le produit programme informatique selon la revendication 11.

13. Système de traitement de données programmé pour exécuter le procédé selon la revendication 10.

$$MV_k \qquad\qquad PMV_k$$

$$100 \qquad\qquad 130$$

$$\begin{array}{ccc} M_1 & M_j & M_N \end{array}$$

$$\left[\begin{Bmatrix} m_1^1 \\ \vdots \\ m_i^1 \\ \vdots \\ m_M^1 \end{Bmatrix} \cdots \begin{Bmatrix} m_1^j \\ \vdots \\ m_i^j \\ \vdots \\ m_M^j \end{Bmatrix} \cdots \begin{Bmatrix} m_1^N \\ \vdots \\ m_i^N \\ \vdots \\ m_M^N \end{Bmatrix}\right] \quad \xrightarrow{120} \quad \left[\begin{Bmatrix} p_1^1 \\ \vdots \\ p_i^1 \\ \vdots \\ p_M^1 \end{Bmatrix} \cdots \begin{Bmatrix} p_1^q \\ \vdots \\ p_i^q \\ \vdots \\ p_M^q \end{Bmatrix}\right]$$

$$\begin{array}{ccc} 101 & 102 & 103 \end{array} \qquad\qquad \begin{array}{cc} 131 & 132 \end{array}$$

Fig. 1

OBTAIN DATA — 201

DETERMINE METRICS — 202

PREDICT FUTURE METRICS — 203

$P_1 \dots P_Q$

CONSULT LIBRARY — 204

COMPARE VECTORS — 205

IDENTIFY BEHAVIOURAL PATTERNS — 206

IDENTIFY RECOMMENDED SETTING — 207

TRIGGER RECOMMENDED SETTING — 208

Fig. 2

EP 3 389 303 B1

EP 3 389 303 B1

IDENTIFY
BEHAVIOURAL
PATTERNS
— 206

IDENTIFY MOST
EFFICIENT
RESPONS
300 —

IDENTIFY MOST
OCCURING
PROBLEM
— 301

IDENTIFY
RECOMMENDED
SETTING
302 —

TRIGGER
RECOMMENDED
SETTING
— 303

**Fig. 3**

402

403

401

404

405

400

421

422

423

424

420

**Fig. 4**

Fig. 5

EP 3 389 303 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019184520 A1
- WO 2016169616 A1